# EUROPÄISCHE PATENTSCHRIFT

(11) **EP 3 921 679 B1**
(45) Veröffentlichungstag und Bekanntmachung des Hinweises auf die Patenterteilung: **17.04.2024**
(21) Anmeldenummer: 20705885.0
(22) Anmeldetag: 30.01.2020
(51) Int. Cl.: B42D 25/29, B42D 25/328, G02B 5/18

(54) **GITTERSTRUKTURBILD ZUR DARSTELLUNG EINES MEHRFARBIGEN BEUGUNGSBILDS**
GRID STRUCTURE IMAGE FOR REPRESENTING A MULTI-COLOUR DIFFRACTION IMAGE
IMAGE DE STRUCTURE DE GRILLE POUR LA REPRÉSENTATION D'UNE IMAGE DE DIFFRACTION MULTICOLORE

(30) Priorität: 04.02.2019 DE 102019000785
(43) Veröffentlichungstag der Anmeldung: 15.12.2021
(60) Teilanmeldung: 24162323.0
(73) Patentinhaber: Giesecke+Devrient Currency Technology GmbH, 81677 München (DE)
(72) Erfinder: GERHARDT, Thomas, 81549 München (DE); PFEIFFER, Matthias, 81675 München (DE)
(74) Vertreter: Giesecke+Devrient IP
(86) Internationale Anmeldenummer: PCT/EP2020/000030
(87) Internationale Veröffentlichungsnummer: WO 2020/160836

(56) Entgegenhaltungen:
- EP-A1- 0 105 099
- DE-A1-102009 056 934
- DE-A1-102012 105 571
- DE-A1-102013 105 246

## Beschreibung

Die Erfindung betrifft ein Gitterstrukturbild zur Darstellung eines mehrfarbigen Beugungsbilds, das eine Mehrzahl von Gitter-Bildfeldern aufweist, die bei Beleuchtung des Gitterstrukturbilds in einer gewünschten Farbe leuchten, und die zur Erzeugung der gewünschten Farbe jeweils ein oder mehrere Gittermuster aus einer Vielzahl von Strichgitterlinien enthalten, die jeweils durch eine Gitterkonstante und eine azimutale Winkelorientierung charakterisiert sind.

Zur Echtheitsabsicherung von Kreditkarten, Banknoten und anderen Wertdokumenten werden seit einigen Jahren Hologramme, holographische Gitterbilder und andere hologrammähnliche Beugungsstrukturen eingesetzt. Dabei werden im Allgemeinen holographische Beugungsstrukturen verwendet, die sich durch Prägung von holographisch erzeugten Gitterstrukturbildern in thermoplastisch verformbare Kunststoffe oder UV-härtbaren Lack auf Foliensubstraten herstellen lassen.

Bei Echtfarbhologrammen werden die verschiedenen Farbflächen dabei bisher meist aus drei Kanälen für die Grundfarben Rot, Grün und Blau zusammengesetzt, so dass durch additive Farbmischung die gewünschten Echtfarben erzeugt werden können. Die so erhaltenen mehrkanaligen Mischfarben sind allerdings in der Praxis oft nur wenig brillant. Auch die Grundfarben selbst erscheinen dabei wenig brillant, da jedes Farbpixel Teilflächen für alle drei Grundfarben enthält und im Fall der Darstellung nur einer Grundfarbe die Flächenbereiche der beiden anderen Grundfarben unbelegt bleiben. Eine korrekte Echtfarbdarstellung ist zudem in der Regel nur innerhalb eines engen Blickwinkelbereichs verwirklicht und beim Verkippen aus einer idealen Betrachtungsrichtung heraus entstehen rasch Fehlfarben, die insbesondere bei Portraits oder Naturdarstellungen unnatürlich wirken. Auch beim azimutalen Verdrehen der Echtfarbhologramme entstehen oft bereits bei kleinen Drehwinkeln störende Fehlfarben.

Mikrooptische Echtfarbenbilder basieren auf der anderen Seite auf Strukturfarben, wie etwa photonische 2D-Kristalle, plasmonische Farben, ZOD-Farben und dergleichen. Der Farbeindruck solcher mikrooptischer Echtfarbenbilder ist typischerweise winkelunabhängig, so dass beim Kippen oder Drehen keine Fehlfarben entstehen. Allerdings sind mikrooptische Echtfarbenbilder derzeit noch sehr farbschwach und blass und zudem nur mit gro-ßem Aufwand herzustellen.

Aus der Druckschrift DE 10 2013 105 246 A1 ist ein optisch variables Element bekannt, das erste und zweite Beugungsgitter aufweist, die hochfrequent sind und daher in die Nullte Beugungsordnung reflektierend wirken.

In der Druckschrift DE 10 2012 105 571 A1 ist ein Dekorelement beschrieben, insbesondere in Form einer Transferfolie, einer Laminierfolie oder eines Sicherheitsfadens, welches eine Mikrostruktur aufweist, die im Auflicht oder im Durchlicht einen optischen Effekt generiert. Die Mikrostruktur weist dabei in einem ersten Bereich eine Grundfläche und mehrere Grundelemente auf, die jeweils eine gegenüber der Grundfläche erhöhte oder versenkte Elementfläche und eine zwischen der Elementfläche und der Grundfläche angeordneten Flanke aufweisen.

Die Druckschrift DE 10 2009 056 934 A1 befasst sich mit einem Sicherheitselement mit einem Träger, der einen Flächenbereich aufweist, der in eine Vielzahl von Pixeln aufgeteilt ist. Die Mehrzahl der Pixel weisen jeweils mehrere optisch wirksame Facetten mit gleicher Orientierung pro Pixel auf.

Dabei sind die Facetten so orientiert, dass für einen Betrachter der Flächenbereich als gegenüber seiner tatsächlichen Raumform vor- und/oder zurückspringender Fläche wahrnehmbar ist.

In der Druckschrift EP 0 105 099 A1 ist ferner ein Dokument mit einem beugungsoptischen Sicherheitselement in Form einer Beugungsstruktur offenbart, welche durch Beugung einfallenden Lichtes mindestens ein Farbmuster erzeugt. Dieses von der zufälligen Beleuchtungs- und Beobachtungsrichtung abhängige Farbmuster bewegt sich auf dem Dokument mit lokal vorbestimmter Geschwindigkeit entlang einer vorbestimmten Bahn, wenn das Dokument in seiner Ebene in einem bestimmten Drehsinn und mit einer bestimmten Geschwindigkeit gedreht wird.

Davon ausgehend liegt der Erfindung die Aufgabe zugrunde, ein Gitterstrukturbild der eingangs genannten Art anzugeben, das in dem im Sicherheitsbereich geforderten großtechnischen Maßstab herstellbar ist und dabei neben hoher Fälschungssicherheit ein attraktives und leuchtstarkes Erscheinungsbild aufweist.

Diese Aufgabe wird durch die Merkmale der unabhängigen Ansprüche gelöst. Weiterbildungen der Erfindung sind Gegenstand der abhängigen Ansprüche.

Gemäß der Erfindung ist bei einem gattungsgemäßen Gitterstrukturbild vorgesehen, dass
- das Gitterstrukturbild einen Brillanzbereich enthält, dessen Fläche mehr als 50% der von Gitter-Bildfeldern belegten Fläche des Gitterstrukturbilds einnimmt, wobei
- die Gitter-Bildfelder in dem Brillanzbereich aus Spektralfarbfeldern bestehen, die jeweils ausschließlich Gittermuster derselben Gitterkonstante enthalten und bei Beleuchtung in einer Spektralfarbe leuchten,
- in dem Brillanzbereich zumindest vier Spektralfarbfelder mit unterschiedlichen Gitterkonstanten vorgesehen sind, die bei Beleuchtung in unterschiedlichen Spektralfarben leuchten, und
- die Spektralfarbfelder des Brillanzbereichs zumindest zwei Unterbereiche für die beiden Augen eines menschlichen Betrachters enthalten, die jeweils Gittermuster derselben Gitterkonstante, aber mit einer leicht gegeneinander verdrehten azimutalen Winkelorientierung enthalten, um für die beiden Augen einen farbkonstanten Bildeindruck zu erzeugen.

Zur näheren Erläuterung enthält das Gitterstrukturbild einerseits einen Gitterbereich, der durch die mit Gitter-Bildfeldern belegte Fläche des Gitterstrukturbilds gebildet ist, und andererseits einen Normalbereich, der durch die nicht mit Gitter-Bildfeldern belegte Fläche des Gitterstrukturbilds gebildet ist. Der Normalbereich enthält typischerweise einen dunklen Hintergrund, spiegelnde Teilflächen oder auch Bildfelder, die keine Gitterstrukturen enthalten, wie etwa Mikrospiegel-Bildfelder.

Der Gitterbereich des Gitterstrukturbilds enthält nun erfindungsgemäß einen sogenannten Brillanzbereich, in dem die Gitter-Bildfelder aus Spektralfarbfeldern bestehen, also aus einkanaligen Gitter-Bildfeldern, die jeweils ausschließlich Gittermuster derselben Gitterkonstante enthalten und die bei Beleuchtung in einer Spektralfarbe leuchten. Darüber hinaus sind in dem Brillanzbereich zumindest vier Spektralfarbfelder mit unterschiedlichen Gitterkonstanten vorgesehen und die Spektralfarbfelder des Brillanzbereichs weisen jeweils zumindest zwei Unterbereiche mit den oben beschriebenen Eigenschaften für die beiden Augen eines menschlichen Betrachters auf. Der Brillanzbereich kann, muss aber nicht zusammenhängend sein. Im Kern stellt der Brillanzbereich eine Bezeichnung für denjenigen Flächenbereich des Gitterstrukturbilds dar, in dem die Gitter-Bildfelder die oben genannten Eigenschaften aufweisen.

Der Brillanzbereich ist wesentlich für das brillante und leuchtkräftige Erscheinungsbild des Gitterstrukturbilds verantwortlich und nimmt erfindungsgemäß mehr als 50% (oder mehr als 75%, oder 85% oder 95% in bevorzugten Ausgestaltungen) der Fläche des Gitterbereichs ein. Der restliche Flächenanteil des Gitterbereichs von weniger als 50% (oder weniger als 25%, 15% oder 5% in bevorzugten Ausgestaltungen) ist mit anderen Gitterstrukturen belegt, beispielsweise mit mehrkanaligen, insbesondere zwei- oder dreikanaligen Gitter-Bildfeldern, oder mit einkanaligen Gitter-Bildfeldern, die nicht die an die Spektralfarbfelder des Brillanzbereichs gerichteten Anforderungen erfüllen, wie weiter unten genauer erläutert.

Mit Vorteil sind die Spektralfarbfelder des Brillanzbereichs dabei durch Freiformflächen mit irregulärer und unterschiedlicher Form und Größe gebildet. Insbesondere stellen die Spektralfarbfelder keine Pixelierung oder Parkettierung der Fläche des Gitterstrukturbilds dar, da diese jeweils eine Belegung der Fläche mit einem oder wenigen gleichartigen, einfachen geometrischen Flächenelementen voraussetzen.

Die Gittermuster der genannten Unterbereiche sind gegeneinander vorteilhaft um 4° bis 20°, bevorzugt um 6° bis 12°, besonders bevorzugt um etwa 8° gegeneinander verdreht. Die Verdrehung erfolgt in der Regel dadurch, dass die azimutale Winkelorientierung des Gittermusters eines der beiden Unterbereiche um einen bestimmten Offset im Uhrzeigersinn (für das eine Auge), und die azimutale Winkelorientierung des Gittermusters des anderen Unterbereichs um denselben Offset gegen den Uhrzeigersinn (für das andere Auge) gegen die für das Spektralfarbfeld vorgesehene Winkelorientierung θ gedreht ist. Dieser Offset liegt vorzugsweise zwischen 2° und 10°, bzw. zwischen 3° und 6°, bevorzugt bei etwa 4°, die Verdrehung der beiden Gittermuster gegeneinander entspricht dann dem doppelten Offsetwert.

Die Aufteilung der Spektralfarbfelder in Unterbereiche erfolgt vorzugsweise durch Aufteilung in schmale Streifen oder kleine Pixelelemente. In einer vorteilhaften Ausgestaltung sind die Unterbereiche durch alternierend angeordnete Streifen gebildet. Die Breite der Streifen liegt zweckmäßig unterhalb der Auflösungsgrenze des menschlichen Auges, insbesondere unterhalb von 100 µm oder sogar bei 50 µm oder weniger. In einer anderen, ebenfalls vorteilhaften Ausgestaltung sind die Unterbereiche durch verschachtelt angeordnete Pixelelemente gebildet. Die lateralen Abmessungen der Pixelelemente liegt zweckmäßig unterhalb der Auflösungsgrenze des menschlichen Auges, insbesondere unterhalb von 100 µm oder sogar bei 50 µm oder weniger.

Mit Vorteil sind in dem Brillanzbereich zwischen einschließlich 4 und 32, vorzugsweise zwischen einschließlich 8 und 20, besonders bevorzugt zwischen einschließlich 12 und 20 Spektralfarbfelder mit unterschiedlichen Gitterkonstanten vorgesehen.

Das Gitterstrukturbild kann in einer weiteren Ausgestaltung in einem Teilbereich des Brillanzbereichs einen spektralen Farbverlauf enthalten, der durch mehrere, aneinander angrenzende Spektralfarbfelder mit nur wenig variierter Gitterkonstante gebildet ist. Insbesondere ändert sich die Gitterkonstante von einem Spektralfarbfeld zum nächsten um weniger als Δd = 10 nm.

Die Spektralfarbfelder des Brillanzbereichs weisen in einer besonders vorteilhaften Ausgestaltung laterale Abmessungen von mehr als 150 µm in zumindest einer lateralen Richtung auf und sind mit bloßem Auge erkennbar. In diesem Fall können außerhalb des Brillanzbereichs auch Spektralfarbfelder vorliegen, die in allen lateralen Richtungen Abmessungen von 150 µm oder weniger aufweisen.

Die genannten Spektralfarbfelder des Brillanzbereichs weisen bevorzugt sogar Abmessungen von mehr als 250 µm, insbesondere von mehr als 500 µm, in zumindest einer lateralen Richtung, bevorzugt in jeder lateralen Richtung auf.

Der Brillanzbereich nimmt vorzugsweise eine Fläche von mehr als 75%, insbesondere von mehr als 85% der von Gitter-Bildfeldern belegten Fläche des Gitterstrukturbilds ein.

Die Strichgitterlinien der Gittermuster weisen mit Vorteil ein sinusoidales Profil, ein symmetrisches Dreiecksprofil (Sägezahnprofil), ein asymmetrisches Dreiecksprofil (geblaztes Profil) oder ein Rechteckprofil (Binärstruktur) auf. Es versteht sich, dass grundsätzlich auch beliebige andere Profile einsetzbar sind, wobei sich jedoch Sägezahnprofile durch eine besonders hohe Leuchtkraft und sinusoidale Profile durch eine zuverlässige Herstellung bewährt haben.

In dem Brillanzbereich können zumindest ein Teil der Spektralfarbfelder, bzw. Unterbereiche zumindest eines Teils der Spektralfarbfelder auch nur teilweise mit Gittermustern belegt sein, um Spektralfarbfelder unterschiedlicher Helligkeiten zu erzeugen. Mit Vorteil enthält das Gitterstrukturbild dabei zumindest einen mittels solcher nur teilweise belegter Spektralfarbfelder erzeugten Hell-/Dunkel-Verlauf, um den Farbflächen des Beugungsbilds einen plastischen Eindruck zu verleihen.

Das Gitterstrukturbild weist in einer vorteilhaften Ausgestaltung in der von Gitter-Bildfeldern belegten Fläche außerhalb des Brillanzbereichs zwei- oder dreikanalige Gitter-Bildfelder auf, die bei Beleuchtung in Nicht-Spektralfarben, insbesondere in einer unbunten Farbe wie Weiß oder einem Grauton leuchten. Zumindest ein Teil der zwei- oder dreikanaligen Gitter-Bildfelder kann auch nur teilweise mit Gittermustern belegt sein, um Nicht-Spektralfarben unterschiedlicher Helligkeiten zu erzeugen.

In einer vorteilhaften Ausgestaltung weist das Gitterstrukturbild neben den Gitter-Bildfeldern auch Mikrospiegel-Bildfelder auf, die nicht mit Gitterstrukturen, sondern mit einer Anordnung von gerichtet reflektierenden Mikrospiegeln versehen sind. Die Mikrospiegel eines Mikrospiegel-Bildfelds sind vorzugweise alle in dieselbe Richtung in einem gewünschten Winkel gegen die Oberfläche des Gitterstrukturbilds verkippt und erzeugen in der entsprechenden Betrachtungsrichtung ein besonders helles Bildfeld. Die Kantenlänge der Mikrospiegel beträgt mindestens 5 µm. Um diffraktive Farbaufspaltungseffekte zu vermeiden oder zumindest zu minimieren, sind die Mikrospiegel darüber hinaus mit Vorteil quasi-periodisch oder aperiodisch und/ oder mit aperiodisch oder sogar unregelmäßig variierender Form und/ oder Größe anordnet.

Die Erfindung enthält auch ein Sicherheitselement oder einen Datenträger mit einem Gitterstrukturbild der oben beschriebenen Art. Das Sicherheitselement kann insbesondere ein Sicherheitsfaden, beispielsweise ein Fenstersicherheitsfaden, ein Pendelsicherheitsfaden oder ein Aufreißfaden sein, kann aber auch ein breites Sicherheitsband, einen Sicherheitsstreifen, einen Patch oder ein Etikett zum Aufbringen auf ein Sicherheitspapier, Wertdokument oder dergleichen darstellen. Das Sicherheitselement kann über einem Fenster oder einem Durchsichtsbereich eines Datenträgers angeordnet und dann vorzugsweise auf eine zweiseitige Darstellung ausgelegt sein.

Bei dem Datenträger kann es sich insbesondere um ein Wertdokument, wie eine Banknote, insbesondere eine Papierbanknote, eine Polymerbanknote oder eine Folienverbundbanknote, um eine Aktie, eine Anleihe, eine Urkunde, einen Gutschein, einen Scheck, eine hochwertige Eintrittskarte, aber auch um eine Ausweiskarte, wie etwa eine Kreditkarte, eine Bankkarte, eine Barzahlungskarte, eine Berechtigungskarte, einen Personalausweis oder eine Passpersonalisierungsseite handeln.

Das Gitterstrukturbild kann insbesondere mit einem oder mehr Elementen der Gruppe bestehend aus Mattstrukturen, Mottenaugenstrukturen, Mikrospiegelstrukturen, Stereogrammen und Volumenhologrammen kombiniert sein. In einem Teilbereich des Gitterstrukturbilds kann auch eine versteckte Information vorgesehen sein. Beispielsweise kann in einem Teilbereich eines Gitter-Bildfelds ein nicht mit Gittermustern belegter Bereich vorgesehen sein, der eine weitere Information enthält, die nur mit Hilfsmitteln, wie etwa einem Mikroskop wahrnehmbar ist.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote mit einem Sicherheitselement, das ein erfindungsgemäßes Gitterstrukturbild zur Darstellung eines mehrfarbigen Beugungsbilds enthält,
- Fig. 2: einen Ausschnitt des mehrfarbigen Bildmotivs der Fig. 1 im Kopfbereich des Motivs "Ara",
- Fig. 3: einen vergrößerten Detailausschnitt der Fig. 2 in schematischer Darstellung,
- Fig. 4: eine genauere Darstellung eines einzelnen Spektralfarbfelds des Brillanzbereichs eines erfindungsgemäßen Gitterstrukturbilds,
- Fig. 5: eine Darstellung wie Fig. 4 für ein anderes Ausführungsbeispiel der Erfindung,
- Fig. 6: in (a) bis (d) Illustrationen zur teilweisen Belegung von rechteckigen Unterbereichen von Spektralfarbfeldern mit Gittermustern,
- Fig. 7: in (a) bis (d) Illustrationen zur Erzeugung von weiß leuchtenden Gitter-Bildfeldern,
- Fig. 8: in (a) bis (g) Illustrationen zur Erzeugung von grau leuchtenden Gitter-Bildfeldern, und
- Fig. 9: eine Kombination mehrerer der oben beschriebenen Elemente in einem Gitterstrukturbild,
- Fig. 10: in (a) und (b) eine Darstellung wie in Figuren 4 und 5 für weitere Ausführungsbeispiele der Erfindung.

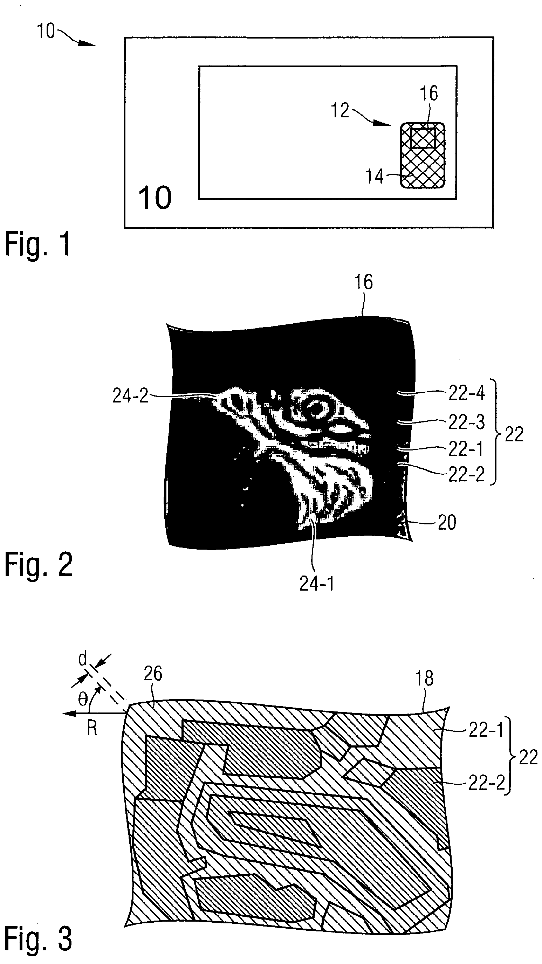

Die Erfindung wird nun am Beispiel von Sicherheitselementen für Banknoten erläutert. Figur 1 zeigt dazu eine schematische Darstellung einer Banknote 10 mit einem Sicherheitselement 12, das ein erfindungsgemäßes Gitterstrukturbild 14 zur Darstellung eines mehrfarbigen Beugungsbilds enthält. Das Gitterstrukturbild 14 des Ausführungsbeispiels erzeugt bei Beleuchtung mit weißem Licht eine brillante und leuchtstarke Darstellung eines Aras. Verglichen mit herkömmlichen Echtfarbhologrammen ist dabei besonders auffällig, dass die Farbbrillanz des Beugungsbilds über einen vergleichsweise großen Winkelbereich stabil ist und kaum Fehlfarben auftreten.

Der Aufbau des Gitterstrukturbilds 14 und das Zustandekommen des brillanten, mehrfarbigen Erscheinungsbilds werden nunmehr mit Bezug auf die Figuren 2 und 3 näher erläutert. Figur 2 zeigt dabei einen Ausschnitt 16 des mehrfarbigen Bildmotivs im Kopfbereich des Aras in Schwarz-Weiß-Darstellung und Fig. 3 zeigt einen vergrößerten Detailausschnitt 18 der Fig. 2 in schematischer Darstellung.

Das Gitterstrukturbild 14 weist eine Mehrzahl von Gitter-Bildfeldern 20 auf, die bei Beleuchtung des Gitterstrukturbilds mit weißem Licht in einer gewünschten Farbe leuchten. Die Gitter-Bildfelder 20 enthalten zur Erzeugung der gewünschten Farbe jeweils eine Gitterstruktur, nämlich ein oder mehrere Gittermuster, die jeweils durch eine Gitterkonstante d und eine azimutale Winkelorientierung θ (Fig. 3) charakterisiert sind.

Im Ausführungsbeispiel sind die Farben der Gitter-Bildfelder 20 auf Beleuchtung mit der Normlichtquelle D65 und auf senkrechte Betrachtung aufgelegt. Unter diesen Bedingungen (und bei Betrachtung in einer der azimutalen Winkelorientierung der Gittermuster angepassten Betrachtungsrichtung) leuchtet beispielsweise das Gitter-Bildfeld 22-1 gelb, das Gitter-Bildfeld 22-2 orange, das Gitter-Bildfeld 22-3 blau, das Gitter-Bildfeld 22-4 grün, das Gitter-Bildfeld 24-1 hellgrau und das Gitter-Bildfeld 24-2 weiß. Der genaue, tatsächlich wahrgenommene Farbeindruck hängt von der Art der Lichtquelle und vom Betrachtungswinkel ab, so dass der Farbeindruck bei anderen Betrachtungsbedingungen etwas von dem Farbeindruck der Auslegungsbedingungen abweichen kann.

Ein besonders leuchtkräftiger Bildeindruck entsteht vorliegend dadurch, dass ein Großteil des von Gitter-Bildfeldern 20 bedeckten Flächenbereichs des Gitterstrukturbilds 14 nicht von mehrkanaligen Gitter-Bildfeldern 24-1, 24-2 belegt ist, sondern von einkanaligen Spektralfarbfeldern 22, welche jeweils ausschließlich Gittermuster derselben Gitterkonstante enthalten. Diese einkanaligen Spektralfarbfelder leuchten daher bei Beleuchtung nicht in einer Mischfarbe, sondern in einer durch die Gitterkonstante bestimmten Spektralfarbe.

Im Ausführungsbeispiel sind acht unterschiedliche Typen von Spektralfarbfeldern 22 vorgesehen, die sich jeweils durch die Gitterkonstante der enthaltenen Gittermuster unterscheiden und die daher bei Beleuchtung in unterschiedlichen Spektralfarben leuchten.

Die Spektralfarbfelder 22 weisen jeweils Abmessungen von mehr als 150 µm in zumindest einer lateralen Richtung auf und sind mit bloßem Auge als einfarbige Spektralfarbfelder zu erkennen. Eine weitere Besonderheit besteht darin, dass die Form und Größe der Spektralfarbfelder 22 nicht regulär ist, die Spektralfarbfelder also keine Pixelierung oder Parkettierung der Fläche mit gleichartigen, einfachen geometrischen Flächenelementen darstellt. Im Gegenteil stellen die Spektralfarbfelder 22 jeweils Freiformflächen mit irregulärer und unterschiedlicher Form und Größe dar, wie in Figuren 2 und 3 ersichtlich.

Die genannten Eigenschaften der Spektralfarbfelder 22 sind in dem schematischen Detailausschnitt 18 der Fig. 3 nochmals veranschaulicht. Die Spektralfarbfelder 22 enthalten jeweils Gittermuster 26 aus einer Vielzahl von Strichgitterlinien, die durch eine Gitterkonstante d und eine azimutale Winkelorientierung θ bezogen auf eine Referenzrichtung R charakterisiert sind. Innerhalb eines jeden Spektralfarbfelds 22 liegen ausschließlich Gittermuster mit derselben Gitterkonstante. Unterschiedliche Spektralfarbfelder 22-1, 22-2 können allerdings Gittermuster mit unterschiedlichen Gitterkonstanten enthalten, wobei im Ausführungsbeispiel wie erwähnt acht unterschiedliche Gitterkonstanten vertreten sind, die unterschiedliche Spektralfarben zwischen Rot (größte Gitterkonstante) und Blau (kleinste Gitterkonstante) erzeugen. Die Spektralfarbfelder 22 weisen jeweils makroskopische Abmessungen auf, sind also mit bloßem Auge aus einem für holographische Sicherheitselemente üblichen Betrachtungsabstand von 20 bis 50 cm als solche erkennbar.

Die azimutale Winkelorientierung θ der Gittermuster legt die Betrachtungsrichtung fest, aus der die zugehörigen Gitter-Bildfelder 20 sichtbar sind. Die azimutalen Winkelorientierungen θ der zu dem Bildmotiv "Ara" gehörenden Gitter-Bildfelder sind daher so aufeinander abgestimmt, dass diese Gitter-Bildfelder aus einer gewünschten Betrachtungsrichtung gleichzeitig aufleuchten und zusammen das Bildmotiv "Ara" ergeben.

Neben den bereits besprochenen einkanaligen Spektralfarbfeldern 22, die im Ausführungsbeispiel einen Brillanzbereich bilden, der mehr als 80% der von Gitter-Bildfeldern belegten Fläche des Gitterstrukturbilds einnimmt, enthält das Bildmotiv "Ara" auch einige mehrkanalige Gitter-Bildfelder, wie etwa das hellgraue Gitter-Bildfeld 24-1 oder das weiße Gitter-Bildfeld 24-2. Derartige mehrkanalige Gitter-Bildfelder dienen der Darstellung von Nicht-Spektralfarben, insbesondere der unbunten Farben Weiß und den verschiedenen Grautönen.

Der Brillanzbereich mit den Spektralfarbfeldern 22 und der von den mehrkanaligen Gitter-Bildfeldern 24-1, 24-2 belegte Flächenbereich bilden zusammen den Gitterbereich des Gitterstrukturbilds. Daneben enthält das Gitterstrukturbild 14 noch einen Normalbereich ohne Gitterstrukturen, der im Ausführungsbeispiel durch den schwarzen Hintergrund der Ara-Darstellung gebildet ist.

Diese genannten Nicht-Spektralfarben werden im Ausführungsbeispiel durch zweikanalige oder dreikanalige Gitter-Bildfelder erzeugt. Besonders helle, hochreflektierende Bereiche können auch durch Bildfelder mit Mikrospiegelstrukturen erzeugt werden, wie an anderer Stelle genauer erläutert. In der vorliegenden Erfindung sind allerdings die Bildfelder, die Nicht-Spektralfarben darstellen, von untergeordneter Bedeutung, da der brillante Farbeindruck des Beugungsbilds durch den hohen Flächenanteil von leuchtstarken, farbigen Spektralfarbfeldern entsteht. Die mehrkanaligen Gitter-Bildfelder und die Mikrospiegel-Bildfelder dienen lediglich einer gegebenenfalls erforderlichen Komplettierung der Farbdarstellung der Bildmotive in kleineren Teilbereichen.

Eine weitere wesentliche Besonderheit des Gitterstrukturbilds 14 besteht darin, dass die Spektralfarbfelder 22 im Brillanzbereich des Gitterstrukturbilds 14 auf eine beidäugige Betrachtung durch einen menschlichen Betrachter ausgelegt und abgestimmt sind.

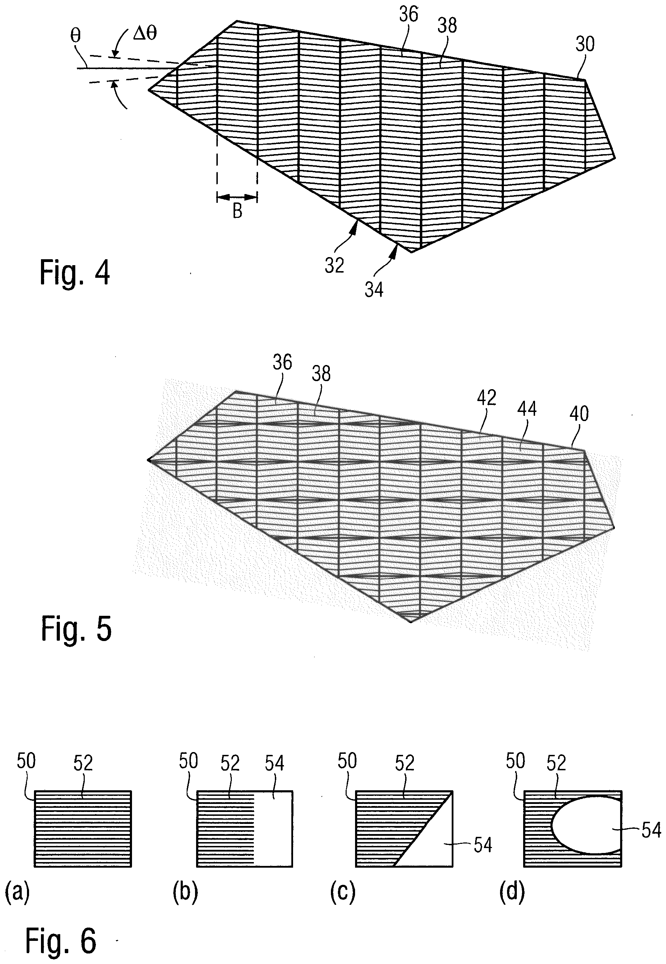

Zur näheren Erläuterung ist in Fig. 4 ein einzelnes Spektralfarbfeld 30 des Brillanzbereichs eines Gitterstrukturbilds herausgegriffen und genauer dargestellt. Wie dort exemplarisch gezeigt, enthalten die Spektralfarbfelder 30 im Brillanzbereich des erfindungsgemäßen Gitterstrukturbilds jeweils zumindest zwei streifenförmige, alternierend angeordnete Unterbereiche 32, 34 für die beiden Augen eines menschlichen Betrachters, welche jeweils Gittermuster 36 bzw. 38 gleicher Gitterkonstante, aber leicht gegeneinander verdrehter azimutaler Winkelorientierung θ₁, θ₂ enthalten.

Bei der Betrachtung des Gitterstrukturbilds 14 sehen das rechte und linke Auge eines Betrachters aufgrund des Augenabstands von typischerweise (durchschnittlich) etwa 65 mm jedes Spektralfarbfeld 30 unter leicht unterschiedlichen Winkeln, was bei herkömmlichen Gitterbildern oft zu einem leicht unterschiedlichen Farbeindruck für die beiden Augen führt. Auch können dann bereits kleine Verkippungen oder Verdrehungen aus dem idealen Betrachtungswinkel heraus Fehlfarben erzeugen, was zumeist unerwünscht ist und gerade bei Portraitdarstellungen oder Naturdarstellungen leicht unnatürlich wirkt.

Diesem Problem wird in der vorliegenden Erfindung durch die gegeneinander verdrehte azimutale Winkelorientierung der Gittermuster 36, 38 in den streifenförmigen Unterbereichen 32, 34 Rechnung getragen und ein Bildeindruck hoher Farbkonstanz erzeugt, d. h. es wird dasselbe Bild für beide Augen farbkonstant dargestellt. Im Ausführungsbeispiel sind die Gittermuster 36, 38 der alternierenden Streifen 32, 34 hierzu jeweils um +4° bzw. -4° gegen die für das Spektralfarbfeld 30 vorgesehene Winkelorientierung θ gedreht. Das Gittermuster 36 der Streifen 32 weist daher eine Gitterkonstante d und eine Winkelorientierung θ₁ = θ + 4° auf, während das Gittermuster 38 der Streifen 34 dieselbe Gitterkonstante d, aber eine Winkelorientierung θ₂ = θ - 4° aufweist. Die beiden Gittermuster 36, 38 sind daher um Δθ = |θ₁ - θ₂| = 8° gegeneinander verdreht. Dadurch wird der Farbeindruck des Spektralfarbfelds 30 für die beiden Augen des Betrachters aneinander angeglichen. D Die Einsehbarkeit des Gitterstrukturbilds 14 wird auf diese Weise vergrößert und insbesondere eine erhöhte Farbstabilität beim Verkippen oder azimutalen Drehen des Gitterstrukturbilds 14 erzielt.

Anders als das Spektralfarbfeld 30 selbst sollen die streifenförmigen Unterbereiche 32, 34 nicht mit bloßem Auge erkennbar sein. Sie haben daher eine Breite B unterhalb der Auflösungsgrenze des bloßen Auges, beispielsweise eine Breite B = 25 µm.

Die Unterbereiche können auch eine andere Form als die in Fig. 4 gezeigte Streifenform aufweisen. Das weitere Ausführungsbeispiel der Fig. 5 zeigt eine schachbrettartige Aufteilung des Spektralfarbfelds 40 in kleine, bis auf die Randbereiche rechteckige Unterbereiche 42, 44 mit einer Abmessung von 25 × 25 µm². Die Unterbereiche 42, 44 enthalten wie bei Fig. 4 jeweils Gittermuster 36 bzw. 38 mit gleicher Gitterkonstante, aber mit einer leicht gegeneinander verdrehten azimutalen Winkelorientierung.

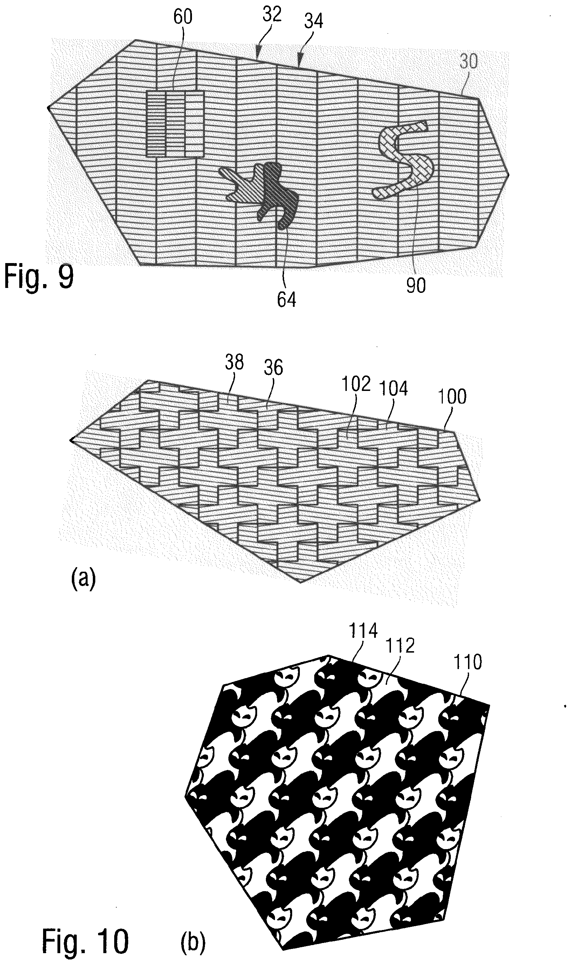

Daneben kommen für die Aufteilung in Unterbereiche auch andere Parkettierungen der Ebene, also eine lückenlose und überlappungsfreie Überdeckung der Fläche eines Spektralfarbfelds durch gleichförmige Kacheln in Betracht. So zeigt das weitere Ausführungsbeispiel der Fig. 10(a) eine Aufteilung des Spektralfarbfelds 100 in kleine, bis auf die Randbereiche kreuzförmige Unterbereiche bzw. Kacheln 102,104, die jeweils aus fünf 10 × 10 µm² großen Quadraten zusammengesetzt sind. Die Unterbereiche 102,104 enthalten wie bei Fig. 5 jeweils Gittermuster 36 bzw. 38 mit gleicher Gitterkonstante, aber mit einer leicht gegeneinander verdrehten azimutalen Winkelorientierung.

Bei dem Ausführungsbeispiel der Fig. 10(b) sind die Unterbereiche bzw. Kacheln 112,114 des Spektralfarbfelds 110 jeweils in Motivform (hier eine Katze) ausgebildet. Die unterschiedlichen azimutalen Winkelorientierungen der in den Unterbereichen 112, 114 enthaltenen Gittermuster sind zur Vereinfachung lediglich durch die unterschiedlichen Farben der Unterbereiche 112,114 illustriert.

Die Kacheln einer Parkettierung können alle dieselbe Form aufweisen, wie in den Figuren 4, 5 und 10 gezeigt, es ist aber auch möglich, eine Parkettierung aus mehreren unterschiedlichen Kacheln zu erzeugen. Ein Beispiel stellt die sogenannte Penrose-Parkettierung dar, bei der zwei unterschiedliche Rauten zur lückenlosen und überlappungsfreien Überdeckung der Spektralfarbfelder verwendet werden.

Während also die kleinen und mit bloßem Auge nicht erkennbaren Unterbereiche der Spektralfarbfelder eine regelmäßige Parkettierung darstellen können, stellen die großen und mit bloßem Auge erkennbaren Spektralfarbfelder selbst gerade keine Parkettierung dar, sondern weisen irreguläre Formen mit unterschiedlicher Form und Größe auf.

Durch mehrere, aneinander angrenzende Spektralfarbfelder mit nur wenig variierter Gitterkonstante können auch spektrale Farbverläufe in dem Gitterstrukturbild erzeugt werden.

Vollständig mit Gittermustern belegte Spektralfarbfelder weisen die höchste erzielbare Helligkeit und Brillanz auf. Durch eine nur teilweise Belegung der Spektralfarbfelder bzw. eine nur teilweise Belegung von Unterbereichen der Spektralfarbfelder können unterschiedliche Helligkeiten bzw. Brillanzen und durch Kombination unterschiedlicher Belegungen sogar Helligkeitsverläufe erzeugt werden.

Figur 6 illustriert eine nur teilweise Belegung von rechteckigen Unterbereichen 50 von Spektralfarbfeldern mit Gittermustern 52. Figur 6(a) zeigt dabei eine vollflächige Belegung mit dem Gittermuster 52 und Figuren 6(b), 6(c) und 6(d) zeigen jeweils eine nur teilflächige Gittermusterbelegung unterschiedlicher Geometrie. Je geringer die Flächenbelegung mit Gitterlinien in einem Unterbereich 50 und je größer der unbelegte Flächenanteil 54 ist, umso dunkler und weniger brillant ist die Farbdarstellung. Mit Hilfe solcher teilweise belegten Unterbereiche 50 können insbesondere Hell-/Dunkel-Verlaufsdarstellungen erzeugt werden, die den Farbflächen des Gitterstrukturbilds 14 einen besonders plastisch wirkenden Eindruck verleihen.

Es versteht sich, dass eine solche teilweise Belegung auch bei unregelmäßig geformten Unterbereichen und bei Unterbereichen in Form von Freiformflächen eingesetzt werden kann, wie etwa den in Fig. 10(a) gezeigten kreuzförmigen Unterbereichen 102, 104, oder den in Fig. 10(b) gezeigten katzenförmigen Unterbereichen 112,114.

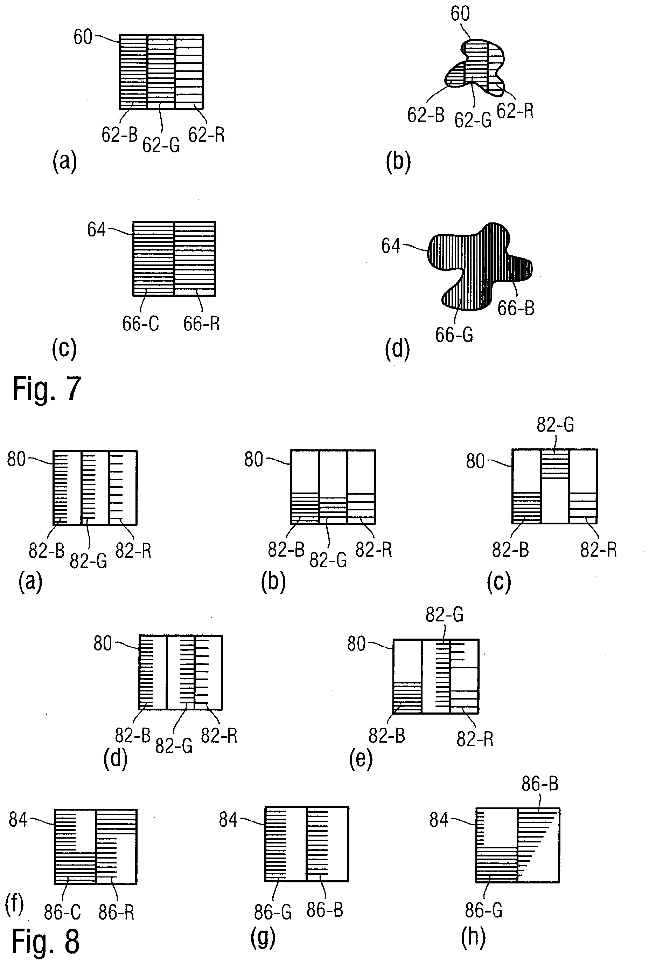

Figur 7 illustriert die Erzeugung der bereits angesprochenen und in geringem Flächenanteil vorgesehenen weiß leuchtenden Gitter-Bildfelder. Mit Bezug auf Fig. 7(a) und 7(b) können weiße Flächen durch dreikanalige Farbflächen 60 erzeugt werden, die drei Gittermuster 62-B, 62-G und 62-R für die Grundfarben Blau, Grün und Rot enthalten und die zusammen durch additive Farbmischung Weiß ergeben. Alternativ kann eine weiße Fläche auch durch zweikanalige Farbflächen 64 erzeugt werden, die zwei Gittermuster mit komplementären Spektralfarben, beispielsweise Cyan (Gittermuster 66-C) und Rot (Gittermuster 66-R) in Fig. 7(c), oder Gelb (Gittermuster 66-G) und Blau (Gittermuster 66-B) in Fig. 7(d) enthalten.

Zur Erzeugung von grau leuchtenden Gitter-Bildfeldern können mit Bezug auf Fig. 8 dreikanalige Farbflächen 80 eingesetzt werden, bei denen die drei Gittermuster 82-B, 82-G und 82-R für die Grundfarben Blau, Grün und Rot jeweils nur in einer Teilfläche vorliegen. Die Figuren 8(a) bis (e) zeigen hierzu mehrere Beispiele unterschiedlicher geometrischer Anordnung der mit Gittermustern belegten Teilflächen 82-B, 82-G und 82-R. Alternativ kann eine grau leuchtende Fläche auch durch eine zweikanalige Farbfläche 84 erzeugt werden, die jeweils in einer Teilfläche zwei Gittermuster für komplementäre Spektralfarben, beispielsweise Cyan (Gittermuster 86-C) und Rot (Gittermuster 86-R) in Fig. 8(f), oder Gelb (Gittermuster 86-G) und Blau (Gittermuster 86-B) in Fig. 8(g) und 8(h) enthalten.

Figur 9 illustriert beispielhaft die Kombination mehrerer der oben genannten Elemente in einem Gitterstrukturbild. Konkret zeigt die Figur eine Kombination eines einkanaligen Spektralfarbfeldes 30 mit streifenförmigen Unterbereichen 32, 34 nach Fig. 4 mit einem dreikanaligen weißen Pixel 60 nach Fig. 7(a), einem zweikanaligen weißen Pixel 64 nach Fig. 7(d) und einem mit einer Mikrospiegelanordnung belegten Teilbereich 90. Die Fläche des Spektralfarbfelds 30 ohne den Teilbereich 90 zählt dabei zum Gitterbereich des Gitterstrukturbilds, der Teilbereich 90, der nicht mit Gitterstrukturen belegt ist, zählt zum Normalbereich. Innerhalb des Gitterbereichs zählt die Fläche des Spektralfarbfelds 30 ohne die Flächen des dreikanaligen Pixels 60, des zweikanaligen Pixels 64 und des Teilbereichs 90 zum Brillanzbereich. Die Flächen der mehrkanaligen Pixel 60 und 64 zählen zum Gitterbereich, aber nicht zum Brillanzbereich, da letzterer nur einkanalige Spektralfarbfelder enthält. Durch eine Kombination von Spektralfarbfeldern, Gitter-Bildfeldern mit Mischfarben, insbesondere weißen oder grauen Gitter-Bildfeldern, und Mikrospiegel-Bildfeldern mit Mikrospiegelanordnungen lässt sich eine Vielzahl visuell attraktiver holographischer Bildmotive erzeugen.

### Bezugszeichenliste

- 10: Banknote
- 12: Sicherheitselement
- 14: Gitterstrukturbild
- 16: Ausschnitt
- 18: Detailausschnitt
- 20: Bildfelder
- 22: Spektralfarbfelder
- 22-1, 22-2, 22-3, 22-4: Spektralfarbfelder
- 24-1, 24-2: mehrkanalige Bildfelder
- 26: Gittermuster
- 30: Spektralfarbfeld
- 32, 34: Unterbereiche
- 36, 38: Gittermuster
- 40: Spektralfarbfeld
- 42,44: Unterbereiche
- 50: Unterbereich
- 52: Gittermuster
- 54: unbelegter Flächenanteil
- 60: dreikanalige Farbflächen
- 62-B, 62-G, 62-R: Gittermuster
- 64: zweikanalige Farbflächen
- 66-C, 66-R: Gittermuster
- 80: dreikanalige Farbflächen
- 82-B, 82-G, 82-R: Gittermuster
- 84: zweikanalige Farbflächen
- 86-C, 86-R: Gittermuster
- 90: mit Mikrospiegelanordnung belegter Teilbereich
- 100: Spektralfarbfeld
- 102,104: Unterbereiche
- 110: Spektralfarbfeld
- 112,114: Unterbereiche
- d: Gitterkonstante
- θ, θ₁, θ₂: azimutale Winkelorientierung
- Δθ: Verdrehung gegeneinander
- B: Breite

## Patentansprüche

1. Gitterstrukturbild (14) zur Darstellung eines mehrfarbigen Beugungsbilds,
das eine Mehrzahl von Gitter-Bildfeldern (20) aufweist, die bei Beleuchtung des Gitterstrukturbilds (14) in einer gewünschten Farbe leuchten, und die zur Erzeugung der gewünschten Farbe jeweils ein oder mehrere Gittermuster (26) aus einer Vielzahl von Strichgitterlinien enthalten, die jeweils durch eine Gitterkonstanted und eine azimutale Winkelorientierung Θ charakterisiert sind, **dadurch gekennzeichnet, dass**
die azimutale Winkelorientierung Θ die Betrachtungsrichtung festlegt, aus der
die Gitter-Bildfelder (20) sichtbar sind, wobei
- das Gitterstrukturbild (14) einen Brillanzbereich enthält, dessen Fläche mehr als 50% der von Gitter-Bildfeldern (20) belegten Fläche des Gitterstrukturbilds (14) einnimmt, wobei
- die Gitter-Bildfelder (20) in dem Brillanzbereich aus Spektralfarbfeldern (22) bestehen, die jeweils ausschließlich Gittermuster (26) derselben Gitterkonstante d enthalten und bei Beleuchtung in einer Spektralfarbe leuchten,
- in dem Brillanzbereich zumindest vier Spektralfarbfelder mit unterschiedlichen Gitterkonstanten vorgesehen sind, die bei Beleuchtung in unterschiedlichen Spektralfarben leuchten, und
- die Spektralfarbfelder (22) des Brillanzbereichs zumindest zwei Unterbereiche (32,34) für die beiden Augen eines menschlichen Betrachters enthalten, die jeweils Gittermuster (36,38) derselben Gitterkonstante, aber mit einer leicht gegeneinander verdrehten azimutalen Winkelorientierung (Θ1,Θ2) enthalten, um für die beiden Augen einen farbkonstanten Bildeindruck zu erzeugen.

2. Gitterstrukturbild nach Anspruch 1, **dadurch gekennzeichnet, dass** die Spektralfarbfelder des Brillanzbereichs durch Freiformflächen mit irregulärer und unterschiedlicher Form und Größe gebildet sind.

3. Gitterstrukturbild nach Anspruch 1 oder 2, **dadurch gekennzeichnet, dass** die Gittermuster der genannten Unterbereiche gegeneinander um 4° bis 20°, bevorzugt um 6° bis 12°, besonders bevorzugt um etwa 8° gegeneinander verdreht sind.

4. Gitterstrukturbild nach wenigstens einem der Ansprüche 1 bis 3, **dadurch gekennzeichnet, dass** die genannten Unterbereiche durch alternierend angeordnete Streifen, vorzugsweise mit einer Breite unterhalb der Auflösungsgrenze des menschlichen Auges gebildet sind.

5. Gitterstrukturbild nach wenigstens einem der Ansprüche 1 bis 3, **dadurch gekennzeichnet, dass** die genannten Unterbereiche durch verschachtelt angeordnete Pixelelemente, vorzugsweise mit lateralen Abmessungen unterhalb der Auflösungsgrenze des menschlichen Auges gebildet sind.

6. Gitterstrukturbild nach wenigstens einem der Ansprüche 1 bis 5, **dadurch gekennzeichnet, dass** in dem Brillanzbereich zwischen einschließlich 4 und 32, vorzugsweise zwischen einschließlich 8 und 20, besonders bevorzugt zwischen einschließlich 12 und 20 Spektralfarbfelder mit unterschiedlichen Gitterkonstanten vorgesehen sind.

7. Gitterstrukturbild nach wenigstens einem der Ansprüche 1 bis 6, **dadurch gekennzeichnet, dass** die Spektralfarbfelder des Brillanzbereichs laterale Abmessungen von mehr als 150 µm in zumindest einer lateralen Richtung aufweisen und mit bloßem Auge erkennbar sind.

8. Gitterstrukturbild nach Anspruch 7, **dadurch gekennzeichnet, dass** die Spektralfarbfelder des Brillanzbereichs Abmessungen von mehr als 250 µm, vorzugsweise von mehr als 500 µm, in zumindest einer lateralen Richtung, bevorzugt in jeder lateralen Richtung aufweisen.

9. Gitterstrukturbild nach wenigstens einem der Ansprüche 1 bis 8, **dadurch gekennzeichnet, dass** der Brillanzbereich eine Fläche von mehr als 75%, insbesondere von mehr als 85% der von Gitter-Bildfeldern belegten Fläche des Gitterstrukturbilds einnimmt.

10. Gitterstrukturbild nach wenigstens einem der Ansprüche 1 bis 9, **dadurch gekennzeichnet, dass** in dem Brillanzbereich zumindest ein Teil der Spektralfarbfelder bzw. Unterbereiche zumindest eines Teils der Spektralfarbfelder nur teilweise mit Gittermustern belegt sind, um Spektralfarbfelder unterschiedlicher Helligkeiten zu erzeugen.

11. Gitterstrukturbild nach wenigstens einem der Ansprüche 1 bis 10, **dadurch gekennzeichnet, dass** das Gitterstrukturbild in der von Gitter-Bildfeldern belegten Fläche außerhalb des Brillanzbereichs zwei- oder dreikanalige Gitter-Bildfelder aufweist, die bei Beleuchtung in Nicht-Spektralfarben, insbesondere in einer unbunten Farbe leuchten.

12. Gitterstrukturbild nach Anspruch 11, **dadurch gekennzeichnet, dass** zumindest ein Teil der zwei- oder dreikanaligen Gitter-Bildfelder nur teilweise mit Gittermustern belegt ist, um Nicht-Spektralfarben unterschiedlicher Helligkeiten zu erzeugen.

13. Gitterstrukturbild nach wenigstens einem der Ansprüche 1 bis 12, **dadurch gekennzeichnet, dass** das Gitterstrukturbild neben den Gitter-Bildfeldern auch Mikrospiegel-Bildfelder aufweist, die mit einer Anordnung von gerichtet reflektierenden Mikrospiegeln versehen sind.

14. Sicherheitselement oder Datenträger mit einem Gitterstrukturbild nach einem der Ansprüche 1 bis 13.

15. Sicherheitselement oder Datenträger nach Anspruch 14, **dadurch gekennzeichnet, dass** das Gitterstrukturbild mit einem oder mehr Elementen der Gruppe bestehend aus Mattstrukturen, Mottenaugenstrukturen, Mikrospiegelstrukturen, Stereogrammen und Volumenhologrammen kombiniert ist.

## Claims

1. Grating structure image (14) for representing a multicoloured diffraction image, having a plurality of grating image fields (20) which shine in a desired colour when the grating structure image (14) is illuminated and which, in order to generate the desired colour, each contain one or more grating patterns (26) composed of a plurality of line grating lines, each **characterized by** a grating constant d and an azimuthal angle orientation θ, **characterized in that** the azimuthal angle orientation θ defines the viewing direction from which the grating image fields (20) are visible, wherein
- the grating structure image (14) contains a brilliance region, the area of which takes up more than 50% of the area of the grating structure image (14) occupied by grating image fields (20), wherein
- the grating image fields (20) in the brilliance region consist of spectral colour fields (22) which each exclusively contain grating patterns (26) of the same grating constant d and shine in a spectral colour upon illumination,
- at least four spectral colour fields having different grating constants are provided in the brilliance region, and shine in different spectral colours upon illumination, and
- the spectral colour fields (22) of the brilliance region contain at least two sub-regions (32, 34) for the two eyes of a human observer, which each contain grating patterns (36, 38) of the same grating constant but with an azimuthal angle orientation (θ1, θ2) slightly rotated relative to one another, in order to generate a colour-constant image impression for the two eyes.

2. Grating structure image according to Claim 1, **characterized in that** the spectral colour fields of the brilliance region are formed by freeform areas having irregular and different shapes and sizes.

3. Grating structure image according to Claim 1 or 2, **characterized in that** the grating patterns of said sub-regions are rotated relative to one another by 4° to 20°, preferably by 6° to 12°, particularly preferably by approximately 8° relative to one another.

4. Grating structure image according to at least one of Claims 1 to 3, **characterized in that** said sub-regions are formed by alternately arranged strips, preferably having a width smaller than the resolution limit of the human eye.

5. Grating structure image according to at least one of Claims 1 to 3, **characterized in that** said sub-regions are formed by interleaved pixel elements, preferably having lateral dimensions smaller than the resolution limit of the human eye.

6. Grating structure image according to at least one of Claims 1 to 5, **characterized in that** between not less than 4 and not more than 32, preferably between not less than 8 and not more than 20, particularly preferably between not less than 12 and not more than 20, spectral colour fields having different grating constants are provided in the brilliance region.

7. Grating structure image according to at least one of Claims 1 to 6, **characterized in that** the spectral colour fields of the brilliance region have lateral dimensions of more than 150 µm in at least one lateral direction and are discernible with the naked eye.

8. Grating structure image according to Claim 7, **characterized in that** the spectral colour fields of the brilliance region have dimensions of more than 250 pm, preferably more than 500 pm, in at least one lateral direction, preferably in each lateral direction.

9. Grating structure image according to at least one of Claims 1 to 8, **characterized in that** the brilliance region takes up an area of more than 75%, in particular more than 85%, of the area of the grating structure image occupied by grating image fields.

10. Grating structure image according to at least one of Claims 1 to 9, **characterized in that** in the brilliance region at least one portion of the spectral colour fields or sub-regions of at least one portion of the spectral colour fields are only partly occupied by grating patterns in order to generate spectral colour fields of different brightnesses.

11. Grating structure image according to at least one of Claims 1 to 10, **characterized in that** the grating structure image, in the area occupied by grating image fields outside the brilliance region, has two- or three-channel grating image fields which shine in non-spectral colours, in particular in an achromatic colour, upon illumination.

12. Grating structure image according to Claim 11, **characterized in that** at least one portion of the two- or three-channel grating image fields is only partly occupied by grating patterns in order to generate non-spectral colours of different brightnesses.

13. Grating structure image according to at least one of Claims 1 to 12, **characterized in that** besides the grating image fields the grating structure image also has micromirror image fields provided with an arrangement of directionally reflective micromirrors.

14. Security element or data carrier comprising a grating structure image according to any of Claims 1 to 13.

15. Security element or data carrier according to Claim 14, **characterized in that** the grating structure image is combined with one or more elements of the group consisting of matt structures, moth-eye structures, micromirror structures, stereograms and volume holograms.

## Revendications

1. Image à structure en grille (14) qui est destinée à représenter une image de diffraction multicolore et qui comporte une pluralité de champs d'image de grille (20) qui s'éclairent dans une couleur souhaitée lorsque l'image à structure en grille (14) est éclairée, et qui, pour produire la couleur souhaitée (26), contiennent chacun un ou plusieurs motifs de grille comprenant un grand nombre de lignes de grille qui sont chacune **caractérisées par** une constante de grille d et une orientation angulaire azimutale **Θ,**
**caractérisée en ce que**
l'orientation angulaire azimutale **Θ** définit la direction de visualisation à partir de laquelle les champs d'image de grille (20) sont visibles,
- l'image à structure en grille (14) contenant une zone de brillance dont la surface occupe plus de 50 % de la surface de l'image à structure en grille (14) qui est occupée par des champs d'image de grille (20),
- les champs d'image de grille (20) dans la zone de brillance comprenant des champs de couleurs spectrales (22) qui contiennent chacun exclusivement des motifs de grille (26) de la même constante de grille et qui s'éclairent dans une couleur spectrale lorsqu'ils sont éclairés,
- au moins quatre champs de couleurs spectrales étant prévus dans la zone de brillance qui ont des constantes de grille différentes qui s'éclairent dans différentes couleurs spectrales lorsqu'ils sont éclairés, et
- les champs de couleurs spectrales (22) de la zone de brillance contenant au moins deux sous-zones (32, 34) qui sont destinées aux deux yeux d'un observateur humain et qui contiennent chacune un motif de grille (36, 38) de même constante de grille, qui présentent des orientations angulaires azimutales (**Θ**1, **Θ**2) légèrement décalées angulairement les unes par rapport aux autres afin de créer une impression d'image de couleur constante pour les deux yeux.

2. Image à structure en grille selon la revendication 1, **caractérisée en ce que** les champs de couleurs spectrales de la zone de brillance sont formés par des surfaces de forme libre ayant des formes et des tailles irrégulières et différentes.

3. Image à structure en grille selon la revendication 1 ou 2, **caractérisée en ce que** les motifs de grille desdites sous-zones sont décalés angulairement les uns par rapport aux autres de 4° à 20°, de préférence de 6° à 12°, de manière particulièrement préférée d'environ 8°.

4. Image à structure en grille selon l'une au moins des revendications 1 à 3, **caractérisée en ce que** lesdites sous-zones sont formées par des bandes disposées en alternance, de préférence avec une largeur inférieure à la limite de résolution de l'œil humain.

5. Image à structure en grille selon l'une au moins des revendications 1 à 3, **caractérisée en ce que** lesdites sous-zones sont formées d'éléments de pixels imbriqués, de préférence de dimensions latérales inférieures à la limite de résolution de l'œil humain.

6. Image à structure en grille selon l'une au moins des revendications 1 à 5, **caractérisée en ce que** entre 4 et 32 inclus, de préférence entre 8 et 20 inclus, de manière particulièrement préférée entre 12 et 20 inclus, champs de couleurs spectrales ayant des constantes de grille différentes sont prévus dans la zone de brillance.

7. Image à structure en grille selon l'une au moins des revendications 1 à 6, **caractérisée en ce que** les champs de couleurs spectrales de la zone de brillance ont des dimensions latérales supérieures à 150 µm dans au moins une direction latérale et sont visibles à l'œil nu.

8. Image à structure en grille selon la revendication 7, **caractérisée en ce que** les champs de couleurs spectrales de la zone de brillance ont des dimensions supérieures à 250 pm, de préférence supérieures à 500 pm, dans au moins une direction latérale, de préférence dans chaque direction latérale.

9. Image à structure en grille selon l'une au moins des revendications 1 à 8, **caractérisée en ce que** la zone de brillance occupe une surface de plus de 75 %, notamment plus de 85 % de la surface de l'image à structure en grille qui est occupée par des champs d'image de grille.

10. Image à structure en grille selon l'une au moins des revendications 1 à 9, **caractérisée en ce que**, dans la zone de brillance, au moins une partie des champs de couleurs spectrales ou des sous-zones d'au moins une partie des champs de couleurs spectrales ne sont que partiellement occupées par des motifs de grille afin de produire des champs de couleurs spectrales de différentes luminosités.

11. Image à structure en grille selon l'une au moins des revendications 1 à 10, **caractérisée en ce que** l'image à structure en grille comporte, dans la surface occupée par des champs d'image de grille située à l'extérieur de la zone de brillance, des champs d'image de grille à deux ou trois canaux qui, lorsqu'ils sont éclairés, s'éclairent dans des couleurs non spectrales, notamment dans une couleur achromatique.

12. Image à structure en grille selon la revendication 11, **caractérisée en ce qu'**au moins une partie des champs d'image de grille à deux ou trois canaux n'est que partiellement occupée par des motifs de grille afin de produire des couleurs non spectrales de différentes luminosités.

13. Image à structure en grille selon l'une au moins des revendications 1 à 12, **caractérisée en ce que** l'image à structure en grille comporte, outre les champs d'image de grille, également des champs d'image à micro-miroirs qui sont pourvus d'un ensemble de micro-miroirs à réflexion directionnelle.

14. Élément de sécurité ou support de données pourvu d'une image à structure en grille selon l'une des revendications 1 à 13.

15. Élément de sécurité ou support de données selon la revendication 14, **caractérisé en ce que** l'image à structure en grille est combinée à un ou plusieurs éléments du groupe comprenant des structures mates, des structures en œil-de-mite, des structures à micro-miroirs, des stéréogrammes et des hologrammes volumiques.
